# EUROPEAN PATENT APPLICATION

(11) **EP 1 988 245 A1**
(43) Date of publication of application: **05.11.2008**
(21) Application number: 07290552.4
(22) Date of filing: 02.05.2007
(51) Int. Cl.: E05F 15/18, F21V 33/00, H02K 41/03

(54) **Sliding door having automatic lighting system**

(71) Applicant: NIITECH CO., LTD., Hiroshima-shi Hiroshima (JP)
(72) Inventor: Kataoka, Mitsuhiro, Hiroshima-shi Hiroshima (JP)
(74) Representative: Chameroy, Claude

(57) **Abstract**

To provide a sliding door using a compact, light and simple linear or rotary motor driven by direct-current electric power at a low manufacturing cost for use of house fittings, carrying devices, electronic devices, and home electric appliances, a linear magnetic pole row (2) or an annular magnetic pole row (4) in which N and S poles are alternately arranged is structured with permanent magnets as a movable side electromagnetic member, two sets of coreless-type rectangular wave wires (or linear array of magnetic poles) are provided as a fixed side electromagnetic member, every time when the magnetic pole row moves by one half pitch, the electricity application is switched from one of the two sets of wave wires to the other.

## Description

### Technical Field

The present invention relates to a sliding door having lighting system using a linear motor which is improved in such a manner that an electric current is not necessary to be sent through a movable member and a manufacturing cost can be reduced on the basis of a smaller size and a reduced weight of a fixed member.

### Background Art

In conventional, a motor has been generally structured such as to be driven by a magnetic attraction and a magnetic repulsive force between a fixed side electromagnet and a movable side electromagnet.

In the case that the movable side electromagnet is rotatably supported, and an electromagnetic driving force is applied in a circular arc direction (or a tangential direction), the rotary motor is structured.

In the case that the movable side electromagnetic force is guided along a straight line, and the electromagnetic driving force is applied in a guiding direction, the linear motor is structured.

### Disclosure of the Invention

### <Problem of Prior Art>

Since the motor in accordance with the prior art is structured on the basis of the magnetic force application between the electromagnets whichever the motor is of the linear type and of the rotary type, an iron core of the electromagnet has a heavy weight, the entire of the motor apparatus is large in size and heavy in weight, and a manufacturing cost is high.

In addition, an electricity conducting structure for sending an electric current to the movable side electromagnet is required, and an alternating-current power supply is required for executing an electromagnetic induction operation.

### <Object of the Present Invention>

The present invention is made by taking the matters mentioned above into consideration, and an object of the present invention is to provide a sliding door having lighting system using a linear motor which has a compact size, a reduced weight and a low cost, and can be driven by a direct-current power supply, and a rotary motor which has a compact size, a reduced weight and a low cost, and can be driven by a direct-current power supply.

### <Means for Achieving Object>

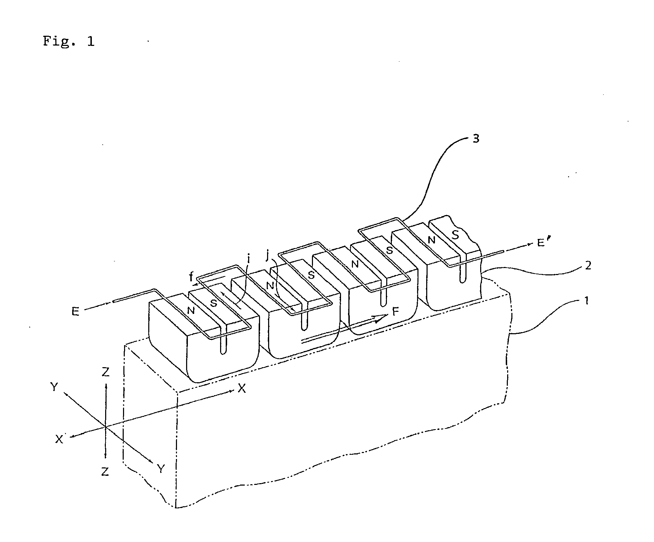

A description will be briefly given of a basic principle of the present invention created for achieving the object mentioned above with reference to Fig. 1 as follows.

Fig. 1 shows an example structured as a linear motor moving a sliding door 1.

An axis X corresponds to an operating direction of the sliding door, an axis Y corresponds to a thickness direction of the sliding door, and an axis Z corresponds to a vertical direction.

A lot of magnet poles N and S are arranged alternately so as to form a linear magnetic pole row 2. The linear magnetic pole row 2 is fixed on the sliding door 1.

A rectangular wave wire 3 is arranged in parallel to a plane X-Y, in a direction of the axis X, and with a pitch in correspondence to a magnetic pole arrangement pitch of the linear magnetic pole row, and the rectangular wave wire is placed in a fixed member (for example, a door lintel).

The rectangular wave wire consists of numerous air-cored coils connected to each other in the X direction, each of the coil spiraled less than once. It is also possible in the present invention to use numerous air-cored coils connected to each other in the X direction, each of the coil spiraled once or more, instead of the above rectangular wave wire.

When sending an electric current through the rectangular wire 3 mentioned above as shown by an arrow E->E', currents i and j flow in a direction of the axis Y, and the rectangular wave wire 3 receives a force in a direction of an arrow f on the basis of an electromagnetic effect.

However, since the rectangular wave wire is a fixed member and is not moved, the linear magnetic pole row 2 attached to the sliding door 1 corresponding to a movable member is driven in a direction of an arrow F on the basis of a reaction thereof.

The description given above with reference to Fig. 1 is an operating principle of a linear motor in accordance with the present invention.

As is apparent from the structure and function mentioned above, the portion in the direction of the axis Y is important for generating the driving force, in the rectangular wave wire 3 or air-cored coils . This portion in the direction of the axis Y is called as an element of the rectangular wave wire 3 or air-cored coils.

The principle for generating the driving force in accordance with the present invention is as mentioned with reference to Fig. 1, however, the movable member is moved by only one pitch distance of the magnetic pole arrangement in accordance with the structure.

A description will be given next of a reason why the movable member is moved by only one pitch and is stopped, and of a structure for continuously moving.

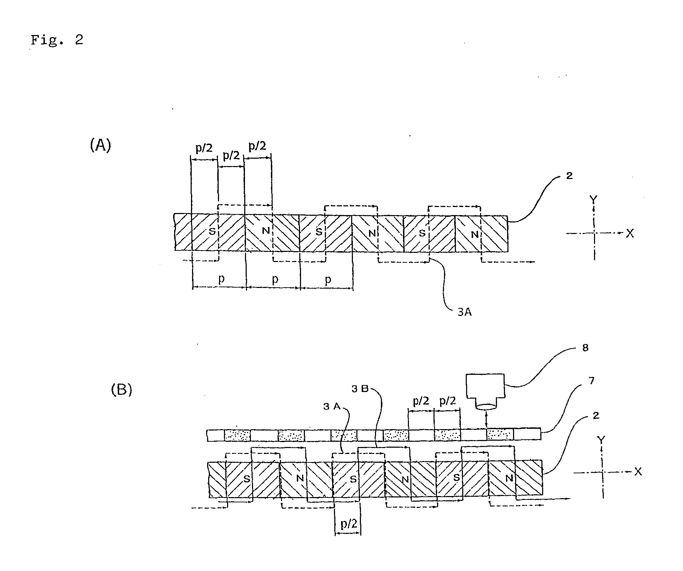

Fig. 2A is a plan view drawing the same structure portion as that in Fig. 1 mentioned above (in which an illustration of the sliding door 1 is omitted). As a matter of convenience for explanation, the rectangular wave wire is drawn by a broken line and is denoted by reference symbol 3A. When sending an electric current through the rectangular wave wire as shown by arrows, the linear magnetic pole row 2 is moved to a right side in the drawing.

As is mentioned in the above, the rectangular wave wire 3A can be replaced with numerous air-cored coils connected to each other in the X direction, each of the coil spiraled once or more.

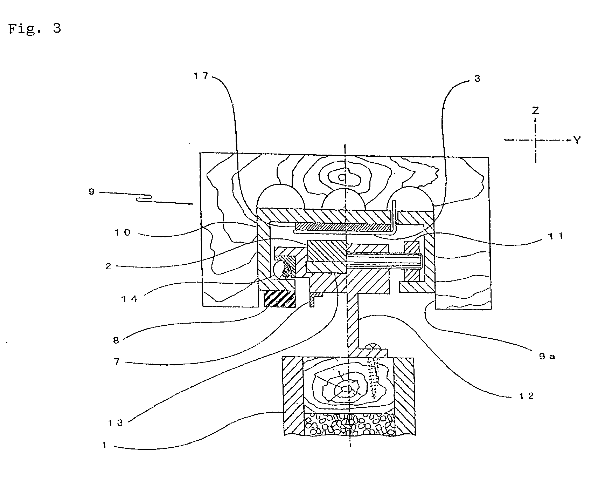

When the linear magnetic pole row 2 is moved to a right side by a half pitch (p/2), a relation between the rectangular wave wire 3A (the broken line) and the linear magnetic pole row 2 becomes as shown by Fig. 3B. As mentioned above, when the element of the rectangular wave wire coincides with a boundary line of the magnetic pole, the force in the direction of the axis X is not applied.

Therefore, a rectangular wave wire 3B drawn by a solid line is previously provided.

Reference symbol 3A denotes a first phase rectangular wave wire, and reference symbol 3B denotes a second phase rectangular wave wire. The position of the first phase rectangular wave wire 3A is shifted by a half pitch (p/2) in the direction of the axis X with respect to the position of the second phase rectangular wave wire. The significance of such an arrangement in an electrical sense is that the elements of the rectangular wave wire 3 or the air-cored coils are shifted by a half pitch with respect to the elements of the second phase rectangular wave wire.
(1) When the linear magnetic pole row 2 is moved by the distance p/2 by sending an electric current through the first phase rectangular wave wire 3A and the driving force is then lost, the electric current application is switched to the second phase rectangular wave wire 3B.
(2) When the linear magnetic pole row 2 is moved by the distance p/2 by sending an electric current through the second phase rectangular wave wire 3B, the electric current application is again switched to the first phase rectangular wave wire 3A. In this case, the electric current is sent in an opposite direction to that in the item (1) mentioned above (because polarities of the opposing magnetic poles are counterchanged).
(3) When the linear magnetic pole row 2 is moved by the distance p/2 in accordance with the item (2), the sending of an electric current is switched to the second phase rectangular wave wire 3B. One cycle is finished thereby.

In order to switch the electric current application in the manner mentioned above, it is necessary to detect the movement of the linear magnetic pole row 2.

A measure is attached to the linear magnetic pole row 2 fixed to the sliding door, and a circuit changing switch (not shown in Fig.2) is activated by reading a motion of the measure by means of an optical sensor 8.

The measure 7 is mounted on the movable member (a sliding door)and the optical sensor 8 is mounted on the fixed member (a door lintel).

It is possible to use an electromagnetic sensor instead of the above optical sensor 8. In such a case, the measure 7 can be made so as to be read electromagnetically. For example, the sensor may be a hall sensor and the measure may be a linear array of magnetic poles.

### Brief Description of the Drawings

Fig. 1 is a schematic perspective view for explaining a working principle of a linear motor structured by applying the present invention;
Fig. 2 is a plain view drawing a structure for continuously actuating the linear motor;
Figs. 3 is a cross sectional view drawing an embodiment of the sliding door in accordance with the present invention; and
Figs. 4 is a cross sectional view drawing an embodiment of the lighting mechanism of the sliding door in accordance with the present invention;
Figs. 5 is a view drawing the driving mechanism and the lighting mechanism of the sliding door in accordance with the present invention.

### Best Mode For Carrying Out the Invention

Fig. 3 is a vertical cross sectional view drawing a electromagnetic driving mechanism used in an embodiment of the sliding door in accordance with the present invention.

An axis X corresponding to a moving direction of a sliding door 1 is perpendicular to a paper surface.

A groove 9a in a direction of the axis X is formed in a door lintel 9, and a rail-cum-case 10 is fitted to the groove.

The rail-cum-case mentioned above has an angular C-shaped cross section. In the present embodiment, a commercially available rail (a sliding door rail similar to a curtain rail) is employed.

A roller 11 is attached to the sliding door 1 via a support device 12, and travels on a rail surface of the rail-cum-case.

A rectangular wave wire 3 (a member shown in Fig. 1 mentioned above) is attached to a ceiling surface of the rail-cum-case 10 mentioned above. The rectangular wave wire 3 can be replaced with numerous air-cored coils connected to each other in the X direction (not shown). Reference numeral 17 denotes a magnetic guide plate.

Since the rectangular wave wire 3 or the air-cored coils is a compact and light (particularly thin) member without an iron core, the rectangular wave wire 3 can be conveniently received in the sliding door rail which is usually available in the market.

A linear magnetic pole row 2 in the direction of the axis X is attached to the support device 12, and faces to the rectangular wave wire 3 or the air-cored coils. The linear magnetic pole row 2 corresponds to the member shown in Fig. 1 mentioned above, however, is structured by magnetizing an elongated magnet steel plate, in the embodiment in Fig. 6. Reference numeral 13 denotes a back plate. The back plate can double as the magnetic guide plate.

A gravity load of the sliding door 1 is supported by the roller 11. The sliding door is positioned and borne in the direction of the axis Y by a guide ball 14.

An optical sensor 8 is placed in the rail-cum-case 10, and a measure 7 is attached to the support device 12. The optical sensor may be replaced with a hall sensor.

Since it is not necessary to connect an electric wire to the measure, the measure has no difficulty with regard to wiring even if the measure is attached to the movable member side (the sliding door 1) . In case a hall sensor is employed, it is not necessary to employ the measure because the hall sensor can detect movement of the sliding door 1 by sensing the linear array of magnetic poles.

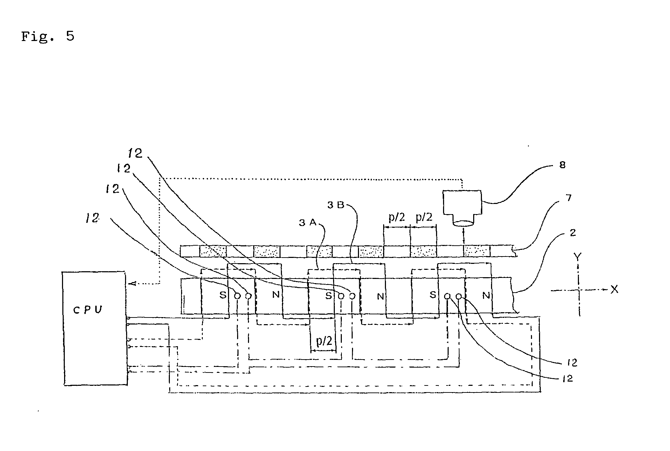

Although an illustration is omitted, a switch circuit is connected to the optical sensor 8 via a signal line, thereby an electric current application of the rectangular wave wire 3 is switched (the details will be explained below referring to Fig. 5).

If an assembly part is structured by removing the door lintel 9 and the sliding door 1 from the members drawn in Fig. 3, and adding the electric control member, a market circulating property is provided, and it is possible to greatly contribute to development of a house building industry.

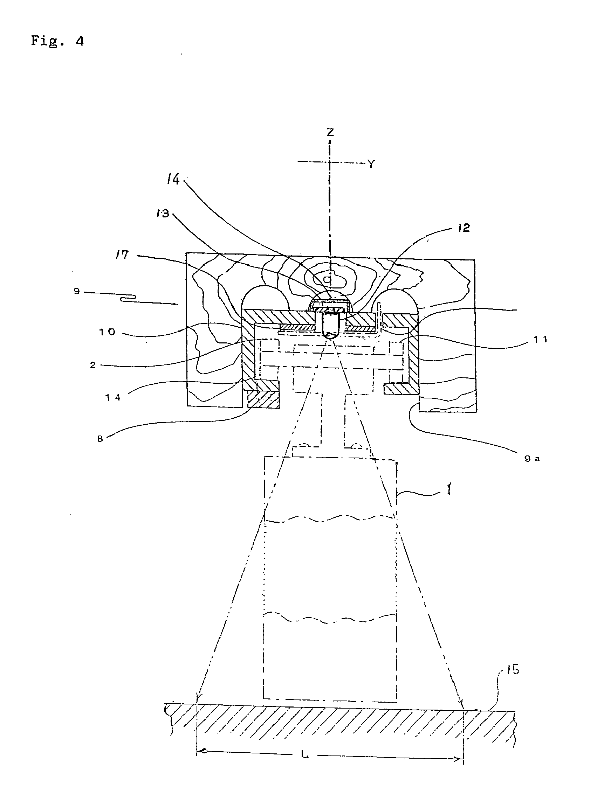

Fig. 4 is a cross sectional view drawing an embodiment of a lighting system used in the present invention. Like reference numerals represent like members in Figs. 3 and 4.

The rail-cum-case 10 has a hole on its ceiling plane which accommodates a lighting source. In the present embodiment, light emitting diodes (LED) 12 is used as a lighting source.

The reference numeral 13 denotes a circuit board and the reference numeral 14 denotes a protective cover.

In this example, the door lintel 9 is made of wood and formed in such a shape that the door lintel 9 can accommodate the circuit board 13 and the protective cover 14.

In case a hall sensor is employed, the hall sensor is mounted on the circuit board 13 so as to be accommodated in the rail-cum-case 10.

The light emitting diodes 12 is arranged so as to emit light downward.

When the sliding door 1 is closed, the floor 15 is not lighted because the lighting path of the light emitting diodes 12 (shown by the dashed triple-dotted line in Fig. 4) is prevented by the sliding door 1. When the sliding door 1 is open, the area L of the floor 15 is lighted.

Described next is a mechanism of regulating the lighting level in accordance with opening and closing of the sliding door 1.

Fig. 5 is a view showing the light emitting diodes 12 and its electrical system equipped with the structure shown in Fig 2B. Only elements and structure not shown in Fig. 2 will be described bellow.

Although the rectangular wave wires 3A, 3B and the linear magnetic pole row 2 appear to be on the same plane in this plain view, it should be noted that the rectangular wave wires 3A, 3B are mounted on the fixed member (for example, a door lintel) and the linear magnetic pole row 2 is mounted on the member (a sliding door). The light emitting diodes 12 are arranged on the fixed member.

The light emitting diodes 12 arranged in an array in the direction of opening and closing movement of said sliding door, i.e. in the x direction, each of the light emitting diodes 12 disposed in a space framed by the rectangular wave wires 3A, 3B.

The light emitting diodes 12 do not light the floor when the sliding door 1 is closed. But when the sliding door 1 gets gradually open, the lighting level of the light emitting diodes 12 gradually increases. When the door 1 is fully open, the floor is lighted at the highest lighting level.

The detail mechanism of the above lighting regulation is as follows.

As mentioned in the above, the sliding door 1 is driven by alternately switching the electric current application of any one set of rectangular wave wire to the other set of rectangular wave wire. The optical sensor 8 reads the scale of the measure 7 and outputs the signal into a controller or CPU. Thus, the controller or CPU can alternately switching the electric current application the rectangular wave wires. Alternatively, a hall sensor may sense movement of the linear array of magnetic poles and outputs the signal into a controller or CPU, thereby allowing the controller or CPU to alternately switch the electric current application the rectangular wave wires.

Since the controller or CPU is capable of detecting the position of the sliding door 1, it is also possible to regulate the brightness of the light emitting diodes 12 in accordance with in such a way that the brightness of the light emitting diodes 12 gradually increases as the sliding door 1 gets opened. The sliding door 1 gradually decreases it lighting level when the door gets closed. When the sliding door 1 is completely closed, the light emitting diodes 12 gets turned off, thus enabling to save on electricity.

For example, the light emitting diodes 12 may be regulated such that the floor is lighted at the highest lighting level when the open width of the sliding door 1 is as wide as a person can enter or exit through the door. Or, in case the sliding door 1 is installed in a cabinet, the light emitting diodes 12 may be regulated such that the floor is lighted at the highest lighting level when the open width of the sliding door 1 is as wide as a piece of baggage can be carried in and out through the door.

### Industrial Applicability

The sliding door in accordance with this invention can be widely utilized in the house building industry or the like, and can be utilized in the field of the house furnishings or the like.

## Claims

1. An electrically opening-and-closing sliding door having a lightning system, comprising:
a linear magnetic pole row (2) in which N poles and S poles are alternately arranged at a fixed pitch (p), the linear magnetic pole row being placed in an upper end portion of the sliding door;
two sets of rectangular wave wires (3A, 3B) or two sets of linear array of magnetic poles in which elements in a direction of an axis Y are arranged in a direction of an axis X at the fixed pitch (p), the rectangular wave wires or the linear array of magnetic poles being fixed to a building so as to face to said linear magnetic pole row (2); and
a means for alternately sending an electric current through said two sets of rectangular wave wires (3A, 3B) or said two sets of or linear array of magnetic poles,
three axes X, Y and Z being orthogonal to each other, the axis X being set in a direction of opening and closing movement of said sliding door, and the axis Z being approximately vertical,
wherein said two sets of rectangular wave wires (3A, 3B) or said two sets of or linear array of magnetic poles are shifted by a half pitch (p/2) from each other in the direction of the axis X, said means for alternately sending an electric current has a function of alternately switching the electric current application of any one set of rectangular wave wire or the linear array of magnetic poles to the other set of rectangular wave wire or the linear array of magnetic poles, every time when the linear magnetic pole row (2) fixed to said sliding door moves by one half pitch (p/2), and one or more light emitting diodes are disposed in the vicinity of the rectangular wave wires or the linear array of magnetic poles, the light emitting diodes are regulated to change the emission level of light in accordance with opening and sliding of the sliding door.

2. The electrically opening-and-closing sliding door having a lightning system as claimed in claim 1, wherein said means for sending an electric current is provided with a measure (7) or a member indicating the position of the sliding door in the X direction which is arranged in the direction of the axis X and attached to the sliding door, and a sensor (8) which reads a moving distance of said measure or reads said position indicating member and is fixed on a building, and said sensor has a function of outputting a detected signal every time when said measure or the sliding door moves by one half pitch (p/2).

3. The electrically opening-and-closing sliding door having a lightning system as claimed in claim 1 or 2, wherein a rail-cum-case (10) having an angular C-shaped cross section, and having a shape schematically similar to a curtain rail is provided to the motor, said rectangular wave wire (3) or said linear array of magnetic poles is attached to an inner surface of said rail-cum-case, and said linear magnetic pole row (2) can pass through a space within said rail-cum-case in the direction of the axis X.

## Amended claims

### Amended claims in accordance with Rule 137(2) EPC.

**1.** An electrically opening-and-closing sliding door, comprising :
a linear magnetic pole row (2) in which N poles and S poles are alternately arranged at a fixed pitch (p), the linear magnetic pole row being placed in an upper end portion of the sliding door ;
two sets of rectangular wave wires (3A, 3B) or two sets of linear array of magnetic poles in which elements in a direction of an axis Y are arranged in a direction of an axis X at the fixed pitch (p), the rectangular wave wires or the linear array of magnetic poles being attached to an inner surface of a rail-cum-case (10) fixed to a building, so as to face said linear magnetic pole row (2) ; and
a controller means (CPU) for alternately sending an electric current through said two sets of rectangular waves wires (3A, 3B) or said two sets of linear array of magnetic poles,
three axes X, Y and Z being orthogonal to each other, the axis X being set in a direction of opening and closing movement of said sliding door, and the axis Z being approximately vertical,
wherein said two sets of rectangular wave wires (3A, 3B) or said two sets of linear array of magnetic poles are shifted by a half pitch (p/2) from each other in the direction of the axis X, said controller means (CPU) for alternately sending an electric current has a function of alternately switching the electric current application of any one set of rectangular wave wire or the linear array of magnetic poles to the other set of rectangular wave wire or the linear array of magnetic poles, every time when the linear magnetic pole row (2) fixed to said sliding door moves by one half pitch (p/2),
**characterized in that** one or more light emitting diodes are disposed into the rail-cum-case (10) so as to emit light downward, the light emitting diodes being regulated by the controller means (CPU) to change the emission level of light in accordance with opening and sliding of the sliding door.

**2.** The electrically opening-and-closing sliding door as claimed in claim 1, wherein said controller means (CPU) for sending an electric current is provided with a measure (7) or a member indicating the position of the sliding door in the X direction which is arranged in the direction of the axis X and attached to the sliding door, and a sensor (8) which reads a moving distance of said measure or reads said position indicating member and is fixed on the building, and said sensor has a function of outputting a detected signal to the controller means (CPU) every time when said measure or the sliding door moves by one half pitch (p/2).
